## Europäisches Patentamt
## European Patent Office
## Office européen des brevets

(11) Publication number: **0 095 240**
**A2**

# (12) EUROPEAN PATENT APPLICATION

(21) Application number: **83302031.6**

(22) Date of filing: **12.04.83**

(51) Int. Cl.³: **B 23 G 1/46**

(30) Priority: **20.05.82 GB 8214727**

(43) Date of publication of application:
**30.11.83 Bulletin 83/48**

(84) Designated Contracting States:
**AT BE CH DE FR IT LI SE**

(71) Applicant: **BRISTOL ERICKSON LIMITED**
**Tower Road North**
**Warmley Bristol BS15 2XF(GB)**

(72) Inventor: **Parry, Reginald Sidney**
**Bristol Erickson Limited Tower Road North**
**Warmley Bristol BS15 2XF(GB)**

(74) Representative: **Kirby, Harold Douglas Benson et al,**
**G.F. Redfern & Company Marlborough Lodge 14**
**Farncombe Road**
**Worthing West Sussex BN11 2BT(GB)**

(54) Improvements in or relating to tool holders.

(57) This invention relates to tool holders suitable for mounting a tap in the spindle of a rotating machine. To allow for axial movement between the tap and the tool holder, the tool holder includes a driving element (10) having a cylindrical sleeve (11) fitted therein. A ball cage (13) is slideable within the sleeve (11) and a tool-holding unit (15) is slideable within the ball cage. Torsional drive forces are transmitted from the element (10) to the unit (15) by means of two hard steel rollers (18 and 19). The roller (19) is in contact with the shoulder (20) on the sleeve (11) and with a shoulder (21) on the unit (15). Similarly, the roller (18) is in contact with a shoulder (22) on the sleeve (11) and a shoulder (23) on the unit (15).

Fig. 1

# IMPROVEMENTS IN OR RELATING TO TOOL HOLDERS:  **0095240**

This invention relates to tool holders, and it is an object of the invention to provide a tool holder which is suitable for mounting a tap in the spindle of a rotating machine.

When using a machine-driven tap to cut a thread in a bore in a workpiece, it is necessary for the spindle to advance axially at the same rate as the tap advances in the bore as the thread is cut. The advance of the spindle is brought about by means of a lead screw which produces relative axial movement between the tap and the work- piece. However, the rate of advance produced by the lead screw is not always precisely synchronised with the rate of advance required by the pitch of the thread being cut. Thus it is necessary to provide axial movement between the tap and the machine spindle to compensate for any such lack of synchronism. Similar considerations apply when the tap is removed from the bore after the thread has been cut.

Accordingly, it has been proposed to provide a tool holder comprising a driving element fitted in ·the machine spindle and a tool—holding unit telescopically mounted in the driving element. A sliding key connection is provided between the driving element and the tool—holding unit so that the driving element is drivingly connected to the tool—holding unit while, at the same time, relative axial sliding movement is permitted between the driving element and the tool— holding unit.

In an arrangement of the kind described, there is sliding friction in the sliding key connection when the driving force is being transmitted to the tap, and this friction interferes with the free axial movement of the tap leading to inaccuracies in the thread cut in the bore and possible damage to the thread or the tap.

In view of this disadvantage, it has been proposed to employ balls in place of the sliding key connection to transmit the torsional drive from the driving element to the tool-holding unit. This produces an improvement while the tool holder is new, but the balls have to interact with shoulders on the driving element and the tool-holding unit and, since the material of the balls is harder than that of the driving element and the tool-holding unit, the shoulders are worn as a result of the brinnelling effect of the balls on the shoulders. This eventually affects the freedom of ball movement and causes similar problems to the sliding key connection.

Accordingly it is an object of the present invention to provide a sliding connection between the driving element and the tool-holding unit which does not suffer from the disadvantages of previously known types of connection.

From one aspect the invention consists in a tool holder comprising a driving element and a tool-holding unit telescopically mounted in said driving element; spring means resisting relative axial movement between said unit and said element; and means for transmitting torsional drive from said element to said unit, said drive-transmitting means comprising a plurality of rollers, the cylindrical surface of each of which is in engagement with a respective first shoulder on said element and a respective second shoulder on said unit.

Preferably there are two rollers and the two second shoulders are located on a diameter of the tool-holding unit. One of the rollers is provided to transmit drive in a clock-wise direction while the other transmits drive in an anti-clockwise direction. Thus the two rollers are coaxial and the two first shoulders are contained in a plane displaced from the diametral plane of the second shoulders by the diameter of the rollers.

It is to be understood that, with an arrangement in accordance with the invention, there is true rolling action when relative axial motion takes place between the tool-holding unit and the driving element while torque is being transmitted from the driving element to the tool-holding unit in either direction.

Preferably a plurality of ball bearings retained in a ball cage are provided between an outer cylindrical surface of the tool-holding unit and an inner cylindrical surface of the driving element. The shoulders are provided in the two cylindrical surfaces, and the rollers are located in the ball cage to move axially with the ball cage whenever relative axial movement of the tool-holding unit and the driving element is produced by differences in the lead of the tap thread and the feed rate of the machine spindle.

Preferably the spring means resist relative axial movement between the unit and the element in both axial directions. Preferably the resistance against movement of the tool-holding unit into the driving element is adjusted. For this purpose, a compression spring may act between an internal shoulder within the tool-holding unit and a nut fitted on a screw which is axially fixed in the driving element. The nut is restrained from rotation, and rotation of the screw produces axial movement of the nut to compress or release the compression spring.

The tool-holding unit preferably includes a locking arrangement to receive a tap-holding cartridge or a collet-type tap holder.

4

From another aspect the invention consists in any features of novelty, taken singly or in combination, of the embodiment of the invention illustrated in the accompanying diagrammatic drawings, in which:-

Figure 1 is a sectional side elevation of a tool holder in accordance with the invention;

Figure 2 is a cross-sectional view of the tool holder shown in Figure 1 taken on the line 2:2 looking in the direction of the arrows;

Figures 3 and 4 respectively show the locking arrangements for holding the tap cartridge in the tool-holding unit in the closed and open positions; and

Figures 5 to 8 illustrate alternative means of fitting a tap in the tool-holding unit.

The tool holder illustrated includes a driving element 10 which, as illustrated, is designed to fit a machine spindle of the tapered-shank type. It is, of course, however to be understood that the driving element may be constructed to fit a straight shank machine spindle. The driving element is retained in the machine spindle by means of a draw-bar or retention studs in known manner.

A cylindrical sleeve 11 is fitted in an internal bore in the driving element by means of bolts 12. Slidable within the sleeve 11 is a ball cage 13 holding a plurality of rings of ball bearings 14. If desired, the parallel rings of ball bearings may, of course, be replaced by a helical arrangement of ball bearings. Slidable within the ball bearing arrangement is a tool-holding unit 15. This unit has an exterior cylindrical surface 16 which is in engagement with the balls 14. Thus the tool-holding unit 15 is axially slidable within the sleeve 11 and is maintained coaxial with the sleeve by means of the ball bearings 14. Dirt is prevented from entering the space containing the ball bearings by means of a seal 17.

Torsional drive forces are transmitted from the driving element 10 to the tool-holding unit 15 by means of two hard steel rollers 18 and 19. The cylindrical surface of the roller 19 is in contact with a shoulder 20 on the sleeve 11 and with a shoulder 21 on the tool-holding unit 15. Similarly, the cylindrical surface of the roller 18 is in contact with a shoulder 22 on the sleeve 11 and a shoulder 23 on the tool-holding unit 15. The two rollers 18 and 19 are restrained by the ball cage 13 so that they move axially with it. It is to be understood that there is line contact throughout the whole length of each roller between the roller and the respective shoulders. Accordingly, this arrangement is not subject to wear in the same way as would be produced if the rollers were replaced by balls when only point contact would be obtainable in each case.

0095240

The shoulders 20 and 22 in the sleeve 11 are respectively produced by cutting axially extending slots 30 and 31 in the cylindrical wall of the sleeve. Similarly, the shoulders 21 and 23 in the tool-holding unit 15 are respectively produced by milling flats 32 and 33 in the outer cylindrical surface 16 of the tool-holding unit 15. The rollers 18 and 19 are accommodated respectively in holes 35 and 36 drilled through the wall of the cage 13.

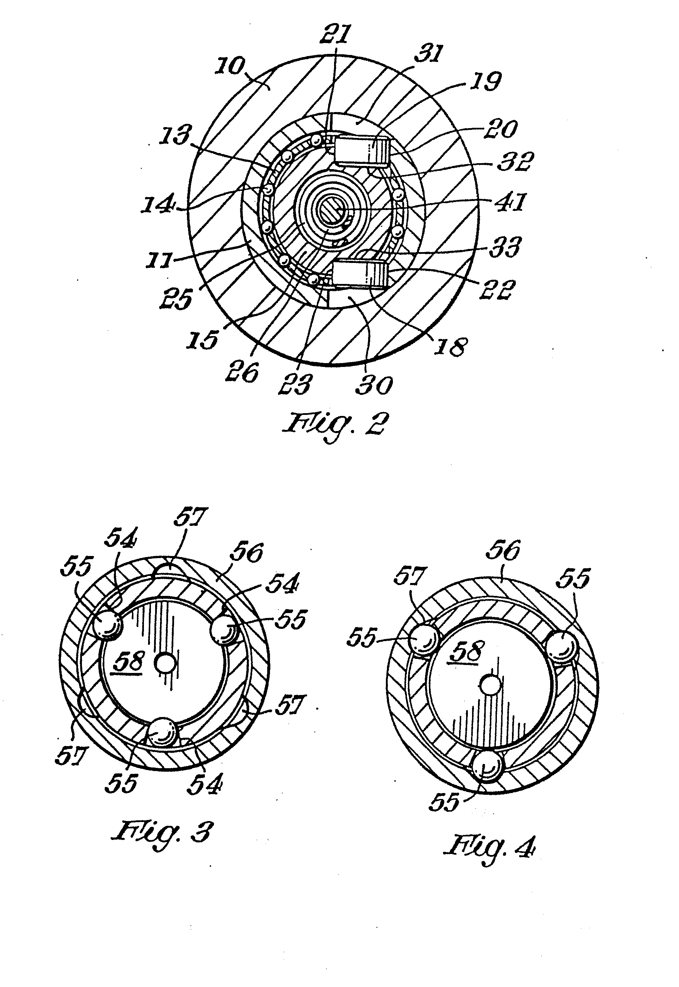

It is, of course, to be understood that the shoulders 21 and 23 are contained in a diametral plane of the tool-holding unit and that the shoulders 20 and 22 are contained in a plane parallel to the diametral plane of the sleeve 11 but displaced from said diametral plane by a distance very slightly exceeding the diameter of the rollers 18 and 19. It is further to be understood that the roller 18 transmits torque between the element 10 and the unit 15 in the clockwise direction as seen in Figure 2, while the roller 19 transmits torque in the anti-clockwise direction.

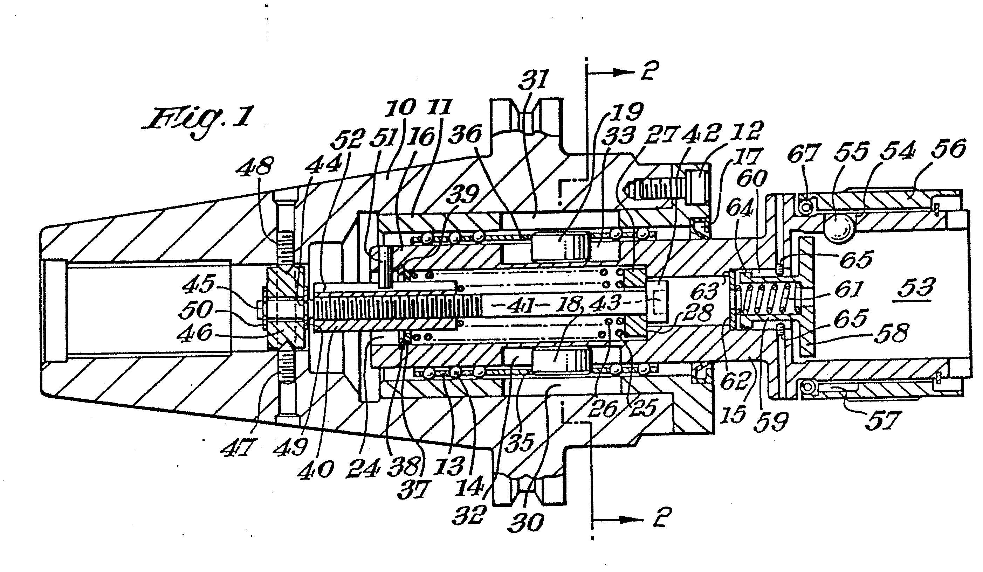

A cylindrical hollow space 24 is provided in the interior of the tool-holding unit 15, and this space contains two coil springs 25 and 26. The right-hand ends (as seen in Figure 1) of both these springs bear against a ring 27 which engages with a shoulder 28. The left-hand end of the spring 25 bears against an annular ring 37 which is held in position in the space 24 by means of a circlip 38 which engages in a groove 39 in the interior cylindrical wall of the tool-holding unit 15. The left-hand end of the spring 26 bears against the right-hand end of an elongated nut 40. This nut is located on the threaded portion of a screw 41. The right-hand end of the screw 41 is provided with a head 42 having a central socket 43 to receive a key. The left-hand end of the screw 41 carries no thread, but is provided with two annular recesses 44 and 45. This end of the screw 41 passes through a bobbin 46 which is held in position in the driving element 10 by means of two screws 47 and 48. Two circlips 49 and 50 are provided in the grooves 44 and 45 and serve to prevent relative axial movement of the screw 41 relative to the driving element 10.

Thus the spring 25 serves to urge the tool-holding unit 15 inwardly with respect to the driving element 10, while the spring 26 serves to urge the tool-holding unit 15 outwardly with respect to the driving element 10.

Rotation of the nut 40 relative to the tool-holding unit 15 is prevented by means of a pin 51 engaging in an axial groove 52 in the outer surface of the nut. Thus the compressive force produced by the spring 26 can be adjusted by rotating the screw 41 by means of a suitable key inserted in the socket 43.

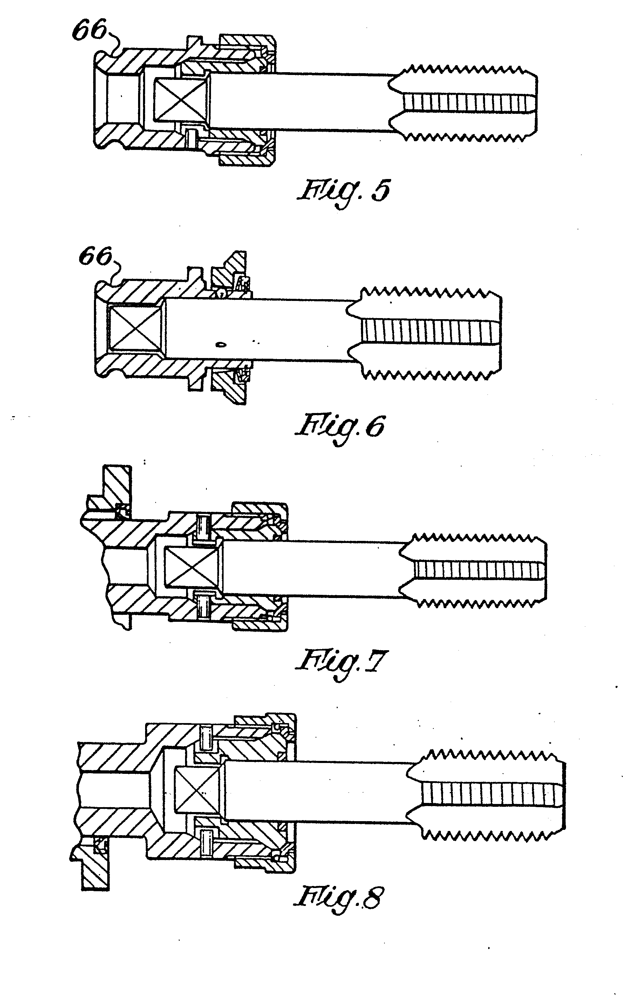

The right-hand end of the tool-holding unit 15 (as seen in Figure 1) is adapted to receive a tap-holding cartridge (as illustrated in Figure 5 or Figure 6) or a collet-type tap holder as illustrated in Figure 7 or Figure 8. For this purpose, the tool-holding unit includes a cylindrical recess 53, the wall of which is provided with three holes 54 to receive respective balls 55. Rotatably mounted on the outer cylindrical surface of the right-hand end of the tool-holding unit 15 is a lock nut 56. The inner cylindrical surface of the lock nut 56 is provided with three recesses 57 (Figure 3) and, when the lock nut is in the open position, (as shown in Figure 4) the balls 55 are free to enter the respective recesses 57. Also provided in the recess 53 is an ejector plate 58. This plate is formed with a boss 59 which is slidable in a cylindrical portion 60 of the tool-holding unit 15.

A spring 61 acts between the rear face of the ejector plate 58 and an annular ring 62 which bears against a shoulder 63 at the left-hand end of the cylindrical portion 60. Thus the ejector plate 58 is urged outwardly by the spring 61 and this outward movement is limited by engagement between a flange 64 on the boss 59 and three grub screws 65 fitted in the unit 15. Thus, when the lock nut 56 is in the open position, the ejector plate 58 moves to the right (as seen in Figure 1) and forces the balls 55 into the recesses 57. The tap-holder or cartridge may then be inserted in the recesses 53 forcing the ejector plate 58 to the left.

As can be seen in Figures 5 and 6, the cartridges are formed with an annular recess 66. The balls 55 engage with the recess 66 and, if the lock nut is rotated to the closed position shown in Figure 3, the balls 55 are forced into the recess 66 and hold the cartridge securely in the tool-holding unit 15. The cartridges and tap holders are well-known and will not be further described. Preferably a coil spring 67 is provided to actuate the lock nut 56 automatically. When the lock nut is rotated to the open position, the coil spring is compressed but, since the balls 55 are forced into the recesses 57 by the ejector plate 58, the lock nut is held in the open position against the force of the spring 67. However, when the cartridge or tap holder is inserted in the recess 53 so that the ejector plate is moved inwardly, the balls 55 are able to move radially inwardly into the recess 66 and thus allow the spring 67 to rotate the lock nut 56 automatically to the closed position.

9

When the lock nut 56 is rotated to the open position with the cartridge or tap-holder in position, the ejector plate 58 urges the cartridge or tap-holder outwardly to assist in its removal.

## CLAIMS

1. A tool holder comprising a driving element and a tool-holding unit telescopically mounted in said driving element; spring means resisting relative axial movement between said unit and said element; and means for transmitting torsional drive from said element to said unit, said drive-transmitting means comprising a plurality of rollers, the cylindrical surface of each of which is in engagement with a respective first shoulder on said element and a respective second shoulder on said unit.

2. A tool holder as claimed in Claim 1, wherein two rollers, two first shoulders and two second shoulders are provided, said two rollers being coaxial, said two second shoulders being located on a diameter of the tool-holding unit and said two first shoulders being contained in a plane displaced from the diametral plane of the second shoulders by the diameter of the rollers.

3. A tool holder as claimed in Claim 2, wherein a plurality of ball bearings retained in a ball cage are provided between an outer cylindrical surface of the tool-holding unit and an inner cylindrical surface of the driving element.

4. A tool holder as claimed in Claim 3, wherein said first and second shoulders are provided respectively in the two cylindrical surfaces and the rollers are retained in the ball cage to move axially therewith.

5. A tool holder as claimed in any of the preceding Claims, wherein the spring means resist relative axial movement between the unit and the element in both axial directions.

11  0095240

6.      A tool holder as claimed in Claim 5, wherein the resistance against axial movement between the unit and the element is adjustable.

7.      A tool holder as claimed in Claim 6, wherein the spring means include a compression spring acting between an internal shoulder within the tool-holding unit and a nut fitted on a screw which is axially fixed in the driving element, the nut being restrained from rotation so that rotation of the screw produces axial movement of the nut to compress or release the compression spring.

8.      A tool holder as claimed in any of the preceding Claims, wherein the tool-holding unit includes a locking arrangement to receive a tap holding cartridge or a collet-type tap holder.

Fig.1

Fig. 2

Fig. 3

Fig. 4

66

*Fig. 5*

66

*Fig. 6*

*Fig. 7*

*Fig. 8*